# EUROPEAN PATENT SPECIFICATION

(11) **EP 0 813 103 B1**
(45) Date of publication and mention of the grant of the patent: **14.08.2002**
(21) Application number: 97108994.1
(22) Date of filing: 04.06.1997
(51) Int. Cl.: G03B 19/02, G03B 17/26

(54) **Film cassette for a photographic camera**
Filmkassette eines Photoapparats
Cassette de film d'un appareil photographique

(30) Priority: 10.06.1996 DE 19623067
(43) Date of publication of application: 17.12.1997
(73) Proprietor: EASTMAN KODAK COMPANY, Rochester, New York 14650 (US)
(72) Inventor: Reibl, Michael, 71032 Boeblingen (DE)
(74) Representative: Lewandowsky, Klaus, Dipl.-Ing.

(56) References cited:
- DE-A- 2 901 104
- DE-A- 3 401 708

## Description

The invention relates to a film cassette for a photographic camera for receiving a film strip equipped with an edge perforation, consisting of a flat, parallelepipedal housing with an exposure window and a film mouth.

Known film cassettes of this design are configured so that they can receive a film strip only as a linear film section. A film cassette of this kind is described in DE-OS 2 901 104. The result is naturally that only a few picture areas can be accommodated on the film section, since the length of the film cassette cannot be of any dimensions. In camera design, however, there is presently a trend toward very small, pocket-size cameras, which nevertheless are intended to supply a sufficient number of pictures per film. Also in demand are cameras that, after complete exposure of a film strip, are unloaded by the finisher in order to develop the film strip and then reloaded by the camera manufacturer with an unexposed film strip in order to resell the camera. Camera concepts of this kind require a new configuration of film cassettes and cameras.

The present invention is defined in claim 1.

It is the object of the invention to configure a film cassette that can be attached in conveniently replaceable fashion to a camera of small, flat design, and that has a film strip with at least eight frames.

According to the invention, this is achieved in a film cassette of the aforesaid type by the fact that configured in the housing of the film cassette is a peripheral, closed-loop, continuous film channel extending in the longitudinal direction thereof, which passes by the exposure window and opens into the film mouth.

This film channel consists of two straight sections extending parallel to one another, whose ends are connected by means of semicircular sections.

Because the film cassette is configured in this manner, it has a very flat design and can receive a film strip of considerable length on which eight to twelve frames can be accommodated in half-frame format, i.e. 18 x 24 mm.

Specifically, the film cassette is advantageously shaped in such a way that the film channel is constituted by the outer walls and semicircular wall sections of the housing, and a web configured in the housing.

Despite the relatively small radius of the web ends, a film strip can easily follow the contour of the channel in the semicircular sections of the film channel without being blocked or damaged in its movement within the film channel. This applies in particular to the Advanced Photo System (APS) films just coming onto the market.

In a further embodiment of the film cassette, the film mouth is arranged in a region in which a semicircular wall section meets an outer wall of the film cassette.

The one semicircular wall section remains joined to the one outer wall, but is arranged separately from the outer wall opposite, this elastic tongue-like wall section resting with its free end against the outer wall under resilient preload, and forming the film mouth.

The elastic tongue-like configuration of the semicircular wall section creates a simple and reliable capability of automatically inserting the film strip into the film cassette, and pulling it back out by means of a gripper after exposure.

For this purpose, a U-shaped transfer shoe that is flat in cross section is provided, such that it can be inserted and pulled out between the outer wall and the elastic tongue-like semicircular wall section.

Further features and advantages are evident from the description of an embodiment of the invention depicted in the drawings, and from the further subclaims. In the drawings:

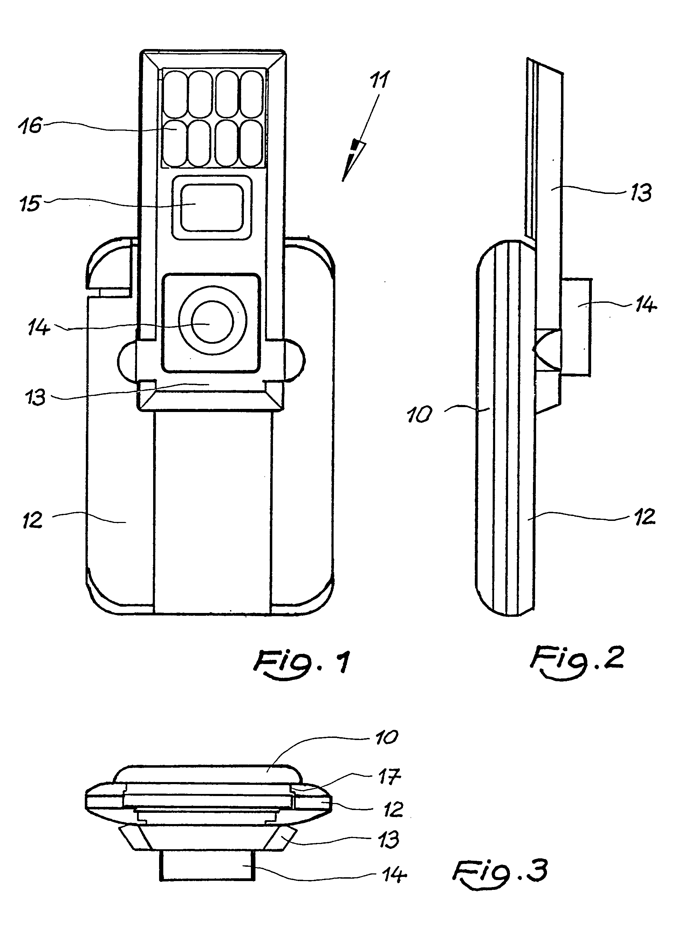

- Fig. 1: shows a camera on which the film cassette according to the invention is used, ready to take a picture, in a front view;
- Fig. 2: shows the camera according to Fig. 1 in a side view;
- Fig. 3: shows the camera according to Fig. 1 in a plan view;
- Fig. 4: shows the empty film cassette according to the invention in a longitudinal section;
- Fig. 5: shows the film cassette according to Fig. 4 with an unexposed film strip in place, in longitudinal section;
- Fig. 6: shows the film cassette according to Fig. 4 with the exposed film strip ready to be pulled out, in longitudinal section;
- Fig. 7: shows the film cassette according to Fig. 4 with the film strip in place, in a front view partially in section; and
- Fig. 8: shows the film cassette according to Fig. 7 in a front view.

Film cassette 10 according to the invention is used in a subminiature camera of flat design, and will be described with reference to such a camera.

Subminiature camera 11 consists of a flat body shell 12 on whose front side a lens carrier 13 is slidable in a flat guideway from a non-operating position into a taking position. Lens carrier 13 carries, in addition to lens 14, a viewfinder 15 and a flash arrangement 16.

On the back side of subminiature camera 11, film cassette 10 is guided, again by means of a flat guideway 17, in body shell 12 so as to slide in and out, and is held in its operating position.

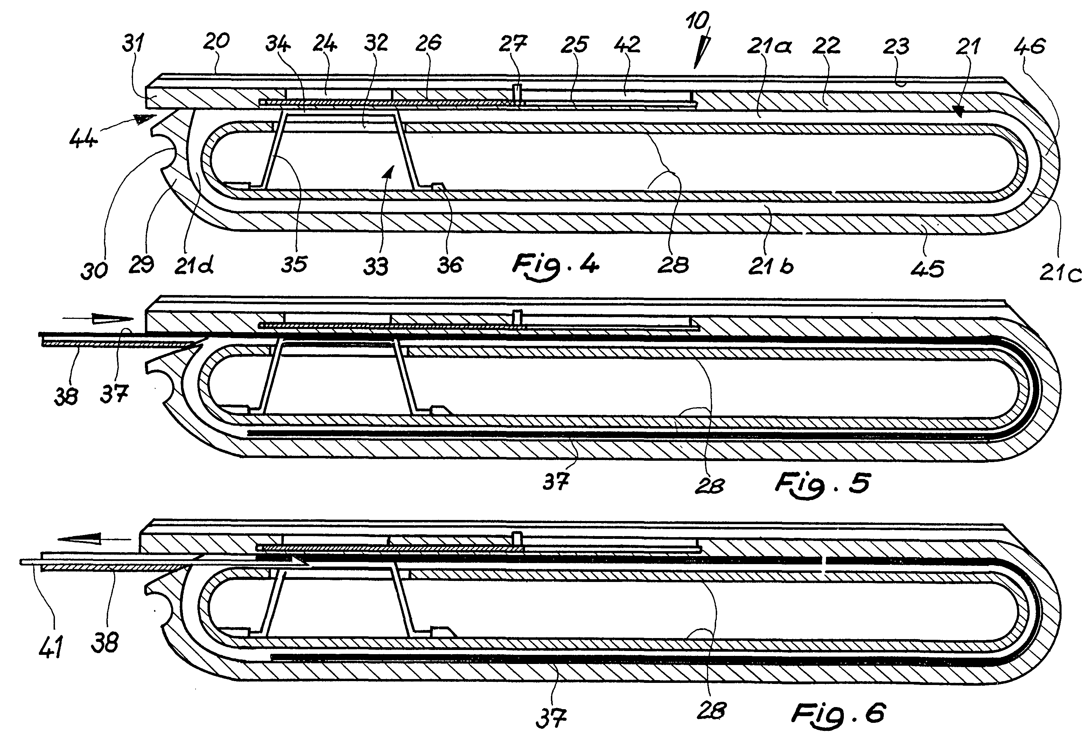

The construction of film cassette 10 is evident in an enlarged depiction in Figures 4, 5, and 6. As indicated therein, film cassette 10 consists of a flat, parallelepipedal housing 20 in which a continuous film channel 21 is provided. Film channel 21 is constituted by two longitudinal sections 21a and 21b extending parallel to one another, as well as semicircular sections 21c and 21d joining their ends.

Parallel to section 21a of film channel 21, housing 20 has an outer wall 22 in which a flat guideway 23 associated with camera-side flat guideway 17 is configured. Parallel to section 21b of film channel 21, housing 20 has an outer wall 45. In addition, an exposure window 24 communicating with film channel section 21a is present in outer wall 22. Provided between film channel section 21a and exposure window 24 is a recess 25 extending over the latter, in which a spring-loaded shutter panel 26 is mounted longitudinally displaceably to close off exposure window 24 when not joined to a camera. A pin 27 that interacts with a camera-side stop in order to open shutter panel 26 is mounted on shutter panel 26. Provided in outer wall 22 of film cassette 10 that faces the camera are two parallel elongated slots 42 which allow a camera-side film gripper to pass through to the film perforation of the film strip in order to transport it.

The inner walls of film channel 21 are constituted by a web 28 that, for reasons related to injection molding, is configured as a hollow web. The ends of web 28 can also be constituted by rotatably mounted rollers whose diameter is identical to the thickness of the web.

In order to form a film mouth 44, a wall section 29 of housing 20 is arranged in the region of semicircular film channel section 21d, separated from outer wall 22 and configured as a film hinge by the fact that a constriction 30 is provided in that wall section 29. The free end of wall section 29 is configured as a lip and rests, in light-tight fashion and under elastic preload, against a projection 31 of outer wall 22.

Lastly, web 28 is equipped, opposite exposure window 24, with an opening 32 which is larger in size than exposure window 24. A film pressure spring 33, which is braced on the one hand by means of a pressure plate 34 against the inside of outer wall 22 and on the other hand by means of spring feet 35 in a socket 36 configured in web 28, projects through this opening 32.

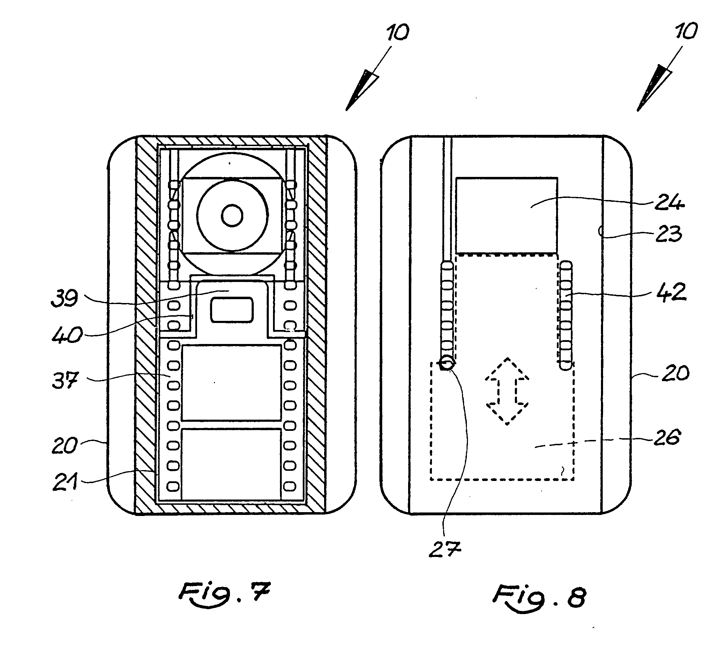

In order to introduce an unexposed packaged film strip 37 of predetermined length through film mouth 44 into film cassette 10, a transfer shoe 38 serving as auxiliary tool is introduced between outer wall 22 and film hinge-like wall section 29, the latter deflecting elastically. Film strip 37 is inserted automatically through this transfer shoe 38 into the film channel of cassette 10 until the film strip completely fills film channel 21. A tongue 39 configured centeredly at the beginning of film strip 37 thus lies in a cutout 40 provided at the end of film strip 37. Figure 7 illustrates this situation.

When film cassette 10 is attached onto subminiature camera 11, shutter panel 26 is pulled back by pin 27 so that exposure window 24 is open and film strip 37 is protected from incident light only by the camera shutter.

In the embodiment, film cassette 10 is approximately the size of a credit card. When a picture format of 18 x 24 mm (half-frame format) is selected, at least eight frames can be accommodated on film strip 37, with the wider side of the frame lying perpendicular to the longitudinal direction of film strip 37.

Removal of exposed film strip 37 from film cassette 10 is also accomplished automatically through film mouth 44 by the fact that with transfer shoe 38 inserted between outer wall 22 and elastic film hinge-like wall section 29, film strip 37 is grasped in its perforation by means of a gripper hook 41 and pulled out of film cassette 10.

The individual film strips are then adhesively attached to one another, tongue 39 of one film strip engaging into cutout 40 of the preceding film strip, and the film strips being adhesively attached at that point.

## Claims

1. Film cassette for a photographic camera to receive a film strip equipped with an edge perforation, consisting of a flat, parallelepipedal housing with an exposure window and a film mouth, **characterized in that** configured in the housing (20) is a peripheral, closed-loop continuous film channel (21) extending in the longitudinal direction thereof, which passes by the exposure window (24) and opens into the film mouth (44).

2. Film cassette as defined in Claim 1, **characterized in that** the film channel (21) consists of two straight ections (21a and 21b) running parallel to one another, whose ends are joined by means of semicircular sections (21c and 21d).

3. Film cassette as defined in Claims 1 and 2, **characterized in that** the film channel (21) is constituted by the outer walls (22, 45) and the semicircular wall sections (29 and 46) of the housing (20) and a web (28) configured in the housing.

4. Film cassette as defined in Claims 1 to 3, **characterized in that** at the ends of the web (28), rollers whose diameter corresponds to the thickness of the web are arranged, mounted rotatably, perpendicular to the movement direction of a film strip (37).

5. Film cassette as defined in Claims 1 to 3, **characterized in that** in the outer wall (22) on the exposure window side, at least one elongated slot (42) extending in the movement direction of the film strip (37) is present for passage of a camera-side film gripper (76).

6. Film cassette as defined in Claim 1, **characterized in that** the film mouth (44) is arranged in a region in which the semicircular wall section (29) meets the outer wall (22).

7. Film cassette as defined in Claims 1 and 6, **characterized in that** the semicircular wall section (29) is joined to the outer wall (45) of the housing and is arranged separately from the opposite outer wall (22); and that it rests with its free end against the outer wall (22) under elastic preload and constitutes the film mouth (44).

8. Film cassette as defined in Claim 7, **characterized in that** in order to insert and pull out the film strip (37) into and from the film cassette (10), a flat transfer shoe (38) that is U-shaped in cross section can be slid between the outer wall (22) and the elastic semicircular wall section (29).

9. Film cassette as defined in Claim 8, **characterized in that** the free end of the semicircular wall section (29) is wedge-shaped.

10. Film cassette as defined in Claim 9, **characterized in that** the wedge-shaped end of the semicircular wall section (29) is equipped with a flexible sealing lip.

11. Film cassette as defined in Claims 9 and 10, **characterized in that** the semicircular wall section (29) is configured like a film hinge.

12. Film cassette as defined in Claims 9 to 11, **characterized in that** the semicircular wall section (29) has a material constriction (30) in the center region of its curve.

13. Film cassette as defined in one of Claims 1 to 12, **characterized in that** the outer wall (22) on the exposure window side is equipped with a flat guideway (23), extending in the longitudinal direction, that interacts with a counter-guideway provided on the camera.

14. Film cassette as defined in Claim 13, **characterized in that** the flat guideway is configured as a dovetail guideway.

15. Film cassette as defined in one of Claims 1 to 14, **characterized in that** a film pressure spring (33) is arranged in the web (28) in the region of the exposure window (24).

16. Film cassette as defined in Claim 15, **characterized in that** the film pressure spring (33) consists of a pressure plate (34), resting against the inside of the outer wall (22), from which proceed spring feet (35) that pass through an opening (32) in the web (28) and are braced against a socket (36) in the web (28).

17. Film cassette as defined in one of Claims 1 to 16, **characterized in that** a spring-loaded shutter panel (26) for the exposure window (24), which covers the exposure window (24) when the film cassette (10) is not being used, is mounted longitudinally displaceably in the outer wall (22) on the exposure window side; and that the shutter panel (26) is equipped with a pin (27) associated with which is a counterstop arranged in the camera, such that when the film cassette (10) is attached to the camera, the shutter panel (26) uncovers the exposure window (24).

## Patentansprüche

1. Filmkassette für eine fotografische Kamera zur Aufnahme eines mit einer Randperforation versehenen Filmstreifens, bestehend aus einem flachen, quaderförmigen Gehäuse mit einem Belichtungsfenster und einem Filmmaul, **dadurch gekennzeichnet, dass** im Gehäuse (20) ein sich in Längsrichtung desselben erstreckender, umlaufender und in sich geschlossener Filmkanal (21) ausgebildet ist, der am Belichtungsfenster (24) vorüberführt und in das Filmmaul (44) mündet.

2. Filmkassette nach Anspruch 1, **dadurch gekennzeichnet, dass** der Filmkanal (21) aus zwei geraden, parallel zueinander verlaufenden Abschnitten (21a und 21b) besteht, deren Enden mittels halbkreisförmiger Abschnitte (21c und 21d) verbunden sind.

3. Filmkassette nach den Ansprüchen 1 und 2, **dadurch gekennzeichnet, dass** der Filmkanal (21) von den Außenwänden (22, 45) und halbkreisförmigen Wandabschnitten (29 und 46) des Gehäuses (20) und einem im Gehäuse ausgebildeten Steg (28) gebildet ist.

4. Filmkassette nach den Ansprüchen 1 bis 3, **dadurch gekennzeichnet, dass** an den Enden des Steges (28) quer zur Bewegungsrichtung eines Filmstreifens (37) Rollen drehbar gelagert angeordnet sind, deren Durchmesser der Dicke des Steges entspricht.

5. Filmkassette nach den Ansprüchen 1 bis 3, **dadurch gekennzeichnet, dass** in der belichtungsfensterseitigen Außenwand (22) mindestens ein sich in Bewegungsrichtung des Filmstreifens (37) erstreckender Längsschlitz (42) für den Durchtritt eines kameraseitigen Filmgreifers (76) eingearbeitet ist.

6. Filmkassette nach Anspruch 1, **dadurch gekennzeichnet, dass** das Filmmaul (44) in einem Bereich angeordnet ist, in dem der halbkreisförmige Wandabschnitt (29) mit der Außenwand (22) zusammentrifft.

7. Filmkassette nach den Ansprüchen 1 und 6, **dadurch gekennzeichnet, dass** der halbkreisförmige Wandabschnitt (29) mit der Außenwand (45) des Gehäuses verbunden und von der gegenüberliegenden Außenwand (22) getrennt ist, und dass er mit seinem freien Ende unter elastischer Vorspannung an der Außenwand (22) anliegt und das Filmmaul (44) bildet.

8. Filmkassette nach Anspruch 7, **dadurch gekennzeichnet, dass** zum Einführen des Filmstreifens (37) in die Filmkassette (10) und zum Herausziehen aus derselben ein flacher, im Querschnitt U-förmiger Übertragungsschuh (38) zwischen der Außenwand (22) und dem elastischen halbkreisförmigen Wandabschnitt (29) einschiebbar ist.

9. Filmkassette nach Anspruch 8, **dadurch gekennzeichnet, dass** das freie Ende des halbkreisförmigen Wandabschnitts (29) keilförmig ausgebildet ist.

10. Filmkassette nach Anspruch 9, **dadurch gekennzeichnet, dass** das keilförmige Ende des halbkreisförmigen Wandabschnitts (29) mit einer weichelastischen Dichtlippe versehen ist.

11. Filmkassette nach den Ansprüchen 9 und 10, **dadurch gekennzeichnet, dass** der halbkreisförmige Wandabschnitt (29) filmscharnierartig ausgebildet ist.

12. Filmkassette nach den Ansprüchen 9 bis 11, **dadurch gekennzeichnet, dass** der halbkreisförmige Wandabschnitt (29) im mittleren Bereich seines Bogens eine Werkstoffverjüngung (30) aufweist.

13. Filmkassette nach einem der Ansprüche 1 und 12, **dadurch gekennzeichnet, dass** die belichtungsfensterseitige Außenwand (22) mit einer sich in Längsrichtung erstreckenden Flachführung (23) versehen ist, die mit einer kameraseitig vorgesehenen Gegenführung zusammenwirkt.

14. Filmkassette nach Anspruch 13, **dadurch gekennzeichnet, dass** die Flachführung als Schwalbenschwanzführung ausgebildet ist.

15. Filmkassette nach einem der Ansprüche 1 bis 14, **dadurch gekennzeichnet, dass** im Bereich des Belichtungsfensters (24) im Steg (28) eine Filmandruckfeder (33) angeordnet ist.

16. Filmkassette nach Anspruch 15, **dadurch gekennzeichnet, dass** die Filmandruckfeder (33) aus einer an der Innenseite der Außenwand (22) anliegenden Andruckplatte (34) besteht, von der eine Ausnehmung (32) im Steg (28) durchgreifende und sich auf einem Sockel (36) im Steg (28) abstützende Federbeine (35) ausgehen.

17. Filmkassette nach einem der Ansprüche 1 bis 16, **dadurch gekennzeichnet, dass** in der belichtungsfensterseitigen Außenwand (22) eine federkraftbeaufschlagte Verschlussplatte (26) für das Belichtungsfenster (24) längsverschiebbar gelagert ist, die im Nichtgebrauchszustand der Filmkassette (10) das Belichtungsfenster (24) abdeckt, und dass die Verschlussplatte (26) mit einem als Anschlag ausgebildeten Stift (27) versehen ist, derart, dass bei an die Kamera angesetzter Filmkassette (10) die Verschlussplatte (26) das Belichtungsfenster (24) freigibt.

## Revendications

1. Cassette de film destinée à un appareil photographique afin de recevoir une bande de film équipée d'une perforation latérale, se composant d'un boîtier plat, parallélépipédique avec une fenêtre d'exposition et une ouverture pour film, **caractérisée en ce qu'**un passage de film continu en boucle fermée, périphérique (21) est configuré dans le boîtier (20), s'étendant dans la direction longitudinale de celui-ci, qui passe par la fenêtre d'exposition (24) et s'ouvre sur l'ouverture pour film (44).

2. Cassette de film selon la revendication 1, **caractérisée en ce que** le passage de film (21) est composé de deux sections droites (2 la et 21b) s'étendant de façon parallèle l'une à l'autre, dont les extrémités sont reliées par l'intermédiaire de sections en demi-cercle (21c et 21d).

3. Cassette de film selon les revendications 1 et 2, **caractérisée en ce que** le passage de film (21) est constitué par les parties extérieures (22, 45) et les sections de paroi en demi-cercle (29 et 46) du boîtier (20) et par une structure (28) configurée dans le boîtier.

4. Cassette de film selon les revendications 1 à 3, **caractérisée en ce que** au niveau des extrémités de la structure (28), des rouleaux dont le diamètre correspond à l'épaisseur de la structure sont agencés, montés de façon à être rotatifs, perpendiculairement à la direction de déplacement d'une bande de film (37).

5. Cassette de film selon les revendications 1 à 3, **caractérisée en ce que** dans la paroi extérieure (22) sur le côté de la fenêtré d'exposition, au moins une rainure allongée (42) s'étendant dans la direction de déplacement de la bande du film (37) est présente pour le passage d'un dispositif de mise en prise de film situé sur le côté de l'appareil photographique (76).

6. Cassette de film selon la revendication 1, **caractérisée en ce que** l'ouverture pour film (44) est agencée dans une région dans laquelle la section de paroi en demi-cercle (29) rencontre la paroi extérieure (22).

7. Cassette de film selon les revendications 1 et 6, **caractérisée en ce que** la section de paroi en demi-cercle (29) est reliée à la paroi extérieure (45) du boîtier et est agencée de façon séparée de la paroi extérieure opposée (22), et **en ce qu'**elle repose avec son extrémité libre contre la paroi extérieure (22) sous une précharge élastique et constitue l'ouverture pour film (44).

8. Cassette de film selon la revendication 7, **caractérisée en ce que** de manière à insérer et à extraire la bande de film (37) dans et depuis la cassette de film (10), une semelle de transfert plate (38) qui est en forme de U dans une section transversale peut être glissée entre la paroi extérieure (22) et la section de paroi élastique en demi-cercle (29).

9. Cassette de film selon la revendication 8, **caractérisée en ce que** l'extrémité libre de la section de paroi en demi-cercle (29) est en forme de coin.

10. Cassette de film selon la revendication 9, **caractérisée en ce que** l'extrémité en forme de coin de la section de paroi en demi-cercle (29) est équipée d'une lèvre d'étanchéité flexible.

11. Cassette de film selon les revendications 9 et 10, **caractérisée en ce que** la section de paroi en demi-cercle (29) est configurée comme un pivot pour film.

12. Cassette de film selon les revendications 9 à 11, **caractérisée en ce que** la section de paroi en demi-cercle (29) présente un resserrement du matériau (30) dans la région centrale de sa courbe.

13. Cassette film selon l'une des revendications 1 à 12, **caractérisée en ce que** la paroi extérieure (22) sur le côté de la fenêtre d'exposition est équipée d'un guide plat (23), s'étendant dans la direction longitudinale, qui interagit avec un contre-guide placé sur l'appareil photographique.

14. Cassette de film selon la revendication 13, **caractérisée en ce que** le guide plat est configuré comme un guide en queue d'aronde.

15. Cassette de film selon l'une des revendications 1 à 14, **caractérisée en ce qu'**un ressort à pression de film (33) est agencé dans la structure (28) dans la région de la fenêtre d'exposition (24).

16. Cassette de film selon la revendication 15, **caractérisée en ce que** le ressort à pression de film (33) est composé d'une plaque d'appui (34), reposant contre la surface interne de la paroi extérieure (22), à partir de laquelle avance un bras de ressort (35) qui passe au travers d'une ouverture (32) dans la structure (28) et qui est fixé dans un socle (36) dans la structure (28).

17. Cassette de film selon l'une des revendications 1 à 16, **caractérisée en ce qu'**une plaque d'obturation sollicitée par un ressort (26), destinée à la fenêtre d'exposition (24), qui couvre la fenêtre d'exposition (24) lorsque la cassette de film (10) n'est pas en cours d'utilisation, est montée longitudinalement de façon à pouvoir être déplacée dans la partie extérieure (22) sur le côté de la fenêtre d'exposition, et **en ce que** la plaque d'obturation (26) est équipée d'une broche (27) associée à celle-ci qui est une contre-butée agencée dans l'appareil photographique, de sorte que lorsque la cassette de film (10) est fixée à l'appareil photographique, la plaque d'obturation (26) ne couvre pas la fenêtre d'exposition (24).
